# FASCICULE DE BREVET EUROPEEN

(11) **EP 1 273 589 B1**
(45) Date de publication et mention de la délivrance du brevet: **16.11.2005**
(21) Numéro de dépôt: 02291380.0
(22) Date de dépôt: 05.06.2002
(51) Int. Cl.: C07F 7/18, C07F 7/20, C09D 143/00

(54) **Procédé de fabrication de (meth)acrylates silanes**
Verfahren zur Herstellung von Acrylat- bzw. Methacrylatsilanen
Process for preparing acrylate or methacrylate silanes

(30) Priorité: 06.07.2001 FR 0108998
(43) Date de publication de la demande: 08.01.2003
(73) Titulaire: Arkema, 92800 Puteaux (FR)
(72) Inventeur: Paul, Jean-Michel, 57070 Metz (FR); Rondini, Joseph, 57880 Ham-Sous-Varsberg (FR)
(74) Mandataire: Rieux, Michel

(56) Documents cités:
- DE-A- 3 443 961
- DATABASE CA [en ligne] CHEMICAL ABSTRACTS SERVICE, COLUMBUS, OHIO, US; DONETS, V. G.: "Synthesis of allylsilyltrimethacrylate" retrieved from STN Database accession no. 97:127702 CA XP002194307 & DEPOSITED DOC. (1980), SPSTL 849 KHP-D80, 5 PP. AVAIL.: SPSTL, 1980,

## Description

La présente invention porte sur un procédé de fabrication d'un (méth)acrylate silané de formule : 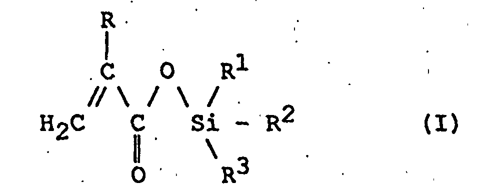 dans laquelle :
- R représente hydrogène ou méthyle ;
- R¹, R² et R³ représentent chacun indépendamment un radical alkyle, linéaire ou ramifié, en C₁-C₁₀, un radical aryle où un radical aralkyle, ces radicaux pouvant être substitués et pouvant contenir des hétéroatomes.

Les (méth)acrylates (I) sont connus pour leur utilisation en tant que monomères hydrolysables servant à la préparation de liants dans le domaine des peintures marines antisalissures ("antifouling"), autolissantes, destinées par exemple au revêtement des coques de bateaux ou plus généralement des matériaux en contact avec le milieu marin (brevets américains US-A-4 593 055 et US-A-4 687 792).

Différentes voies de synthèse sont décrites dans la littérature pour fabriquer ces (méth)acrylates silanés. Celles-ci peuvent être groupées dans le Tableau 1 suivant :

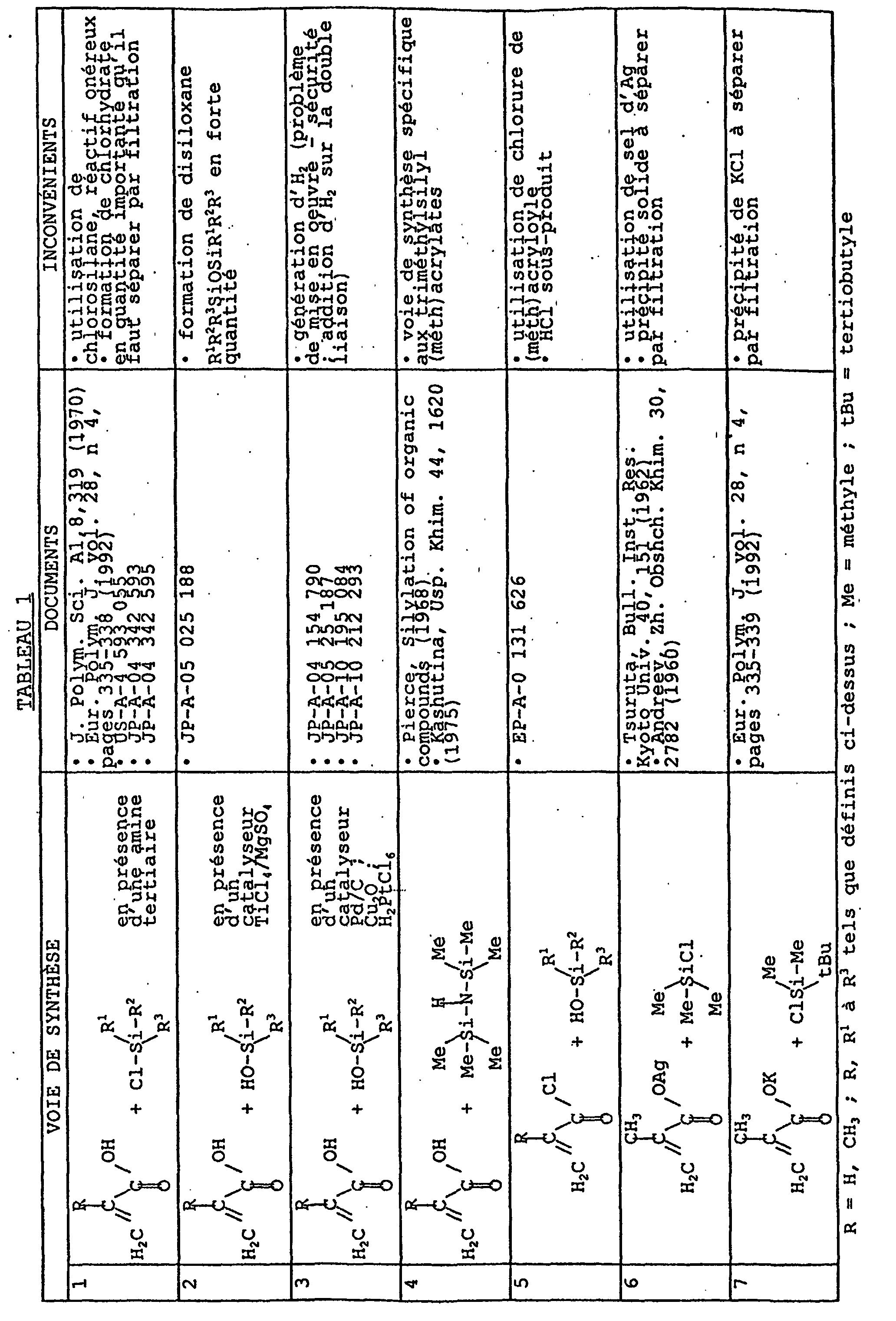

Les voies de synthèse décrites dans le Tableau 1 présentent à un titre ou à un autre nombre de désavantages que la Société déposante a réussi à surmonter en effectuant la synthèse à partir d'anhydride (méth)acrylique et d'un dérivé hydroxylé ou alcoxylé silané.

Le procédé selon l'invention pour la préparation des (méth)acrylates silanés (I) définis ci-dessus permet d'obtenir ceux-ci dans de bonnes conditions de conversion, sélectivité, productivité, sans rejets, sans séparation de solides et sans génération d'H₂. Ainsi, la fabrication des (méth)acrylates silanés (I) selon la présente invention peut se faire en toute sécurité dans de simples réacteurs en acier inoxydables agités, chauffés, contrairement aux procédés qui génèrent H₂ ou HCl comme sous-produits ; en outre, elle ne nécessite pas de lourdes étapes unitaires de type filtration, lavage, séchage de solides.

La présente invention a pour objet un procédé de fabrication d'un (méth)acrylate silané de formule (I), tel que défini ci-dessus, caractérisé par le fait que l'on fait réagir l'anhydride de formule (II) : 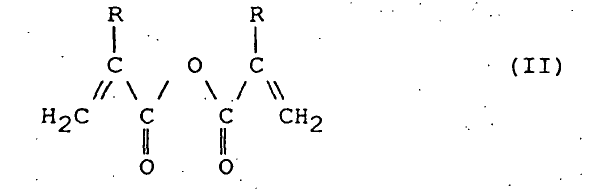 dans laquelle R est tel que défini ci-dessus, avec un composé silané de formule (III) 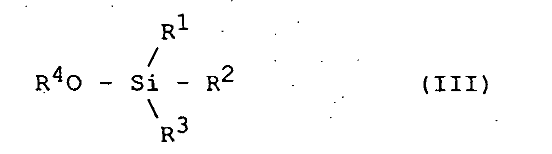 dans laquelle :
- R¹, R² et R³ sont tels que définis ci-dessus ; et
- R⁴ représente hydrogène ou un radical entrant dans la définition donnée ci-dessus pour R¹, R² et R³.

R¹, R², R³ et R⁴ sont choisis notamment parmi les radicaux méthyle, éthyle, n-propyle, isopropyle, n-butyle, isobutyle, tert.-butyle, phényle et alkylphényle avec alkyle en C₁-C₁₀, R⁴ pouvant en outre représenter hydrogène. R⁴, est, de préférence, choisi parmi hydrogène, éthyle, n-propyle et n-butyle.

Comme indiqué ci-dessus, les radicaux R¹ à R³ peuvent être substitués par exemple par des atomes d'halogène, tels que Cℓ, Br, ou des groupements -NR⁵R⁶ (R⁵ et R⁶ représentant des groupements alkyle en C₁ à C₈); par ailleurs, la chaîne de ces radicaux peut être interrompue par un hétérotaome tel que O et S.

On conduit généralement la réaction de l'invention avec un rapport molaire composé (II) / composé (III) qui est compris entre 0,3/1 et 3/1, bien que des rapports molaires inférieurs à 0,3/1 ou supérieurs à 3/1 puissent théoriquement être utilisés. Conformément à une réalisation préférée de l'invention, on conduit la réaction avec un rapport molaire composé (II)/composé(III) qui est compris entre 0,7/1 et 2/1, de préférence entre 0,9/1 et 1,2/1.

On conduit la réaction à une température de 20 à 200°C, de préférence de 75 à 100°C, en particulier de 80 à 120°C, et de préférence à la pression.atmosphérique, bien qu'il soit possible d'opérer sous une pression supérieure ou inférieure à la pression atmosphérique.

Par ailleurs, on conduit la réaction jusqu'à conversion maximale des réactifs déterminée à l'aide des méthodes analytiques usuelles, telles que la chromatographie en phase gazeuse par exemple. La durée de mise en réaction est fonction des conditions opératoires et des réactifs (II) et (III) engagés dans la synthèse. Elle est généralement comprise entre 3 et 8 heures.

La réaction (acylation) peut être effectuée avec ou sans catalyseur. L'utilisation d'un catalyseur permet de supprimer la formation de disiloxanes, d'accroître la cinétique de la réaction et, de ce fait, de réduire la durée de la réaction.

Parmi les catalyseurs utilisables, individuellement ou en mélange de deux d'entre eux ou davantage, on peut citer le 1-méthylimidazole, la diméthylaminopyridine, la 4-pyrrolidinopyridine, la 4-pipéridinopyridine, la 4-morpholinopyridine, les triflates, la tributylphosphine, la triéthylamine, la pyridine, les montmorillonites telles que les montmorillonites K10 et KSF, les acides protiques tels que l'acide paratoluènesulfonique et les acides de Lewis tels que ZnCl₂, le ou les catalyseurs étant utilisés généralement à raison de 0,05 à 1% en poids par rapport au mélange de réactifs. L'utilisation de quantités supérieures de catalyseur est possible sans que cela n'apporte un gain supplémentaire en terme de réduction de la durée de réaction. Le 1-méthylimidazole est le catalyseur préféré.

Par ailleurs, le procédé selon la présente invention est généralement mis en oeuvre en présence d'au moins un inhibiteur de polymérisation choisi notamment parmi l'hydroquinone, l'éther méthylique de l'hydroquinone, la phénothiazine, le 2,2,5,5-tétraméthyl-1-pyrrolidinyloxy (TEMPO) et ses homologues tels que le 3-carboxy-2,2,5,5-tétraméthyl-1-pyrrolidinyloxy, le 2,2,6,6-tétraméthyl-1-pipéridinyloxy, le 4-hydroxy-2,2,6,6-tétraméthyl-1-pipéridinyloxy, le 4-méthoxy-2,2,6,6-tétraméthyl-1-pipéridinyloxy et le 4-oxo-2,2,6,6-tétraméthyl-1-pipéridinyloxy, et les inhibiteurs phénoliques encombrés tels que le 2,4-diméthyl-6-tert.-butyl phénol et le 2,6-di-tert.-butyl paracrésol, et leurs homologues, le ou les inhibiteurs de polymérisation étant utilisés à raison de 0,05 à 0,5 % en poids par rapport au mélange de réactifs.

La réaction selon l'invention est avantageusement effectuée en présence d'air. La fin de réaction est déterminée par analyse du milieu réactionnel (par CPG par exemple).

La réaction selon l'invention conduit à un mélange brut contenant, outre le composé (I), le composé de formule (IV) comme sous-produit : 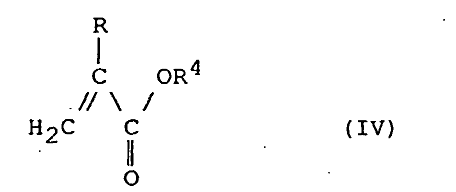 dans laquelle R et R⁴ sont tels que définis à la revendication 1,
à la suite de quoi ledit mélange peut être débarrassé des composés les plus légers par distillation (étêtage) ou peut être soumis, pour obtenir le composé (I) pur, à une distillation, généralement à l'aide d'une colonne à distiller pour les composés (I) plus volatils ou d'un évaporateur à film pour ceux qui ont les points d'ébullition les plus élevés.

Les Exemples suivants illustrent la présente invention sans toutefois en limiter la portée. Les pourcentages sont exprimés en poids sauf indication contraire. Les abréviations utilisées sont les suivantes :
- AMA2O : anhydride méthacrylique
- AA2O : anhydride acrylique
- AMA : acide méthacrylique
- AA : acide acrylique

- Bu3SiMA : méthacrylate de tributylsilyle
- Bu3SiOSiBu3 : hexabutyldisiloxane
- Bu3SiOMe : tributylméthoxysilane
- Bu3SiOH : tributylsilanol
- Bu3SiH : tributylsilane (Bu = n-butyle)

- 1-MIM : 1-méthylimidazole (catalyseur)
- BHT : 2,6-di-tert.-butyl-paracrésol (inhibiteur de polymérisation)
- TOPANOL A : 2,4-diméthyl-6-tert.-butylphénol (inhibiteur de polymérisation)

- Me : méthyle
- Et : éthyle
- nOct : n-octyle
- isoPro : isopropyle
- nPro : n-propyle
- nBu : n-butyle

### EXEMPLE 1 : Préparation du Bu3SiMA à partir d'AMA2O et de Bu3SiOMe

Dans un réacteur en verre chauffé par circulation d'huile chaude thermostatée à l'intérieur d'une double enveloppe, agité mécaniquement (agitation de type ancre), surmonté d'une colonne à distiller de type Vigreux avec condenseur de tête, tête de reflux, séparateur à vide, recette et piège, on introduit :
- .43,2 g d'AMA2O à 98% de pureté ;
- 59,5 g de Bu3SiOMe à 97% de pureté ;
- 0,1 g de TOPANOL A ;
- 0,1 g d BHT ; et
- 0,5 g de 1-MIM.

Le rapport molaire AMA2O/Bu3SiOMe est de 1,1/1.

On effectue un bullage d'air durant toute la synthèse.

Le mélange est chauffé à 110°C pendant 5 h sous agitation. Au terme de ces 5 h, le taux de conversion de Bu3SiOMe est supérieur à 96%. La teneur en Bu3SiMA est de 74%. Le brut est ensuite distillé sous vide.

On recueille une première fraction F1 d'étêtage (13,4 g) sous une pression de 26664,48 à 13332,24 Pa (200 à 100 mm Hg) ; la fraction est composée à plus de 99% par du MAM.

Une fraction F2 (3,5 g) composée d'un mélange d'AMA2O et d'AMA est ensuite distillée.

Le Bu3SiMA est distillé sous 533,29 Pa (4 mm Hg) (température du réacteur de 140 à 180°C en fin de distillation / température de tête de colonne de 138 à 142 °C).

On récupère ainsi 65 g de Bu3SiMA ayant une pureté de 97%. La formation de Bu3SiOSiBu3 est négligeable.

### EXEMPLES 2 à 12 : Préparation de (méth)acrylates silanés par la réaction de l'anhydride (méth)acrylique et d'un composé silané alcoxylé :

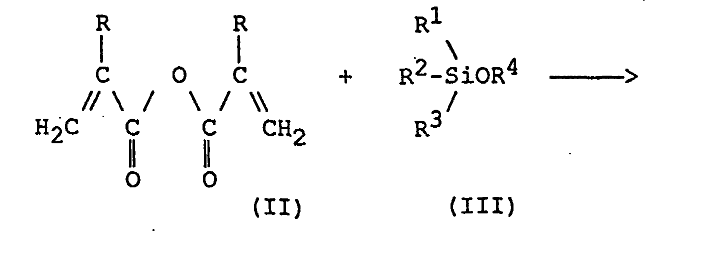

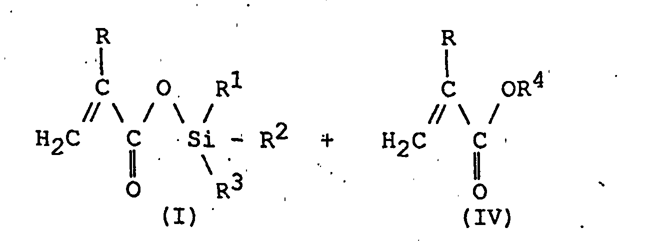

On réalise 11 différentes synthèses comme à l'Exemple 1 mais en partant à chaque fois :
- de l'AMA2O ou de l'AA2O comme composé (II) (R représentant respectivement Me et H) ; et
- d'un composé silané alcoxylé (III) dont les radicaux R¹ à R⁴ sont indiqués dans le Tableau 1.

Dans ce dernier, sont également indiqués :
- la composition du milieu réactionnel (en % molaire) au temps initial ti et au temps tf de fin de réaction (après 5 h à 110 °C) ;
- le taux T(%) de conversion du composé (III) ; et
- le rendement R(%) en composé (I).

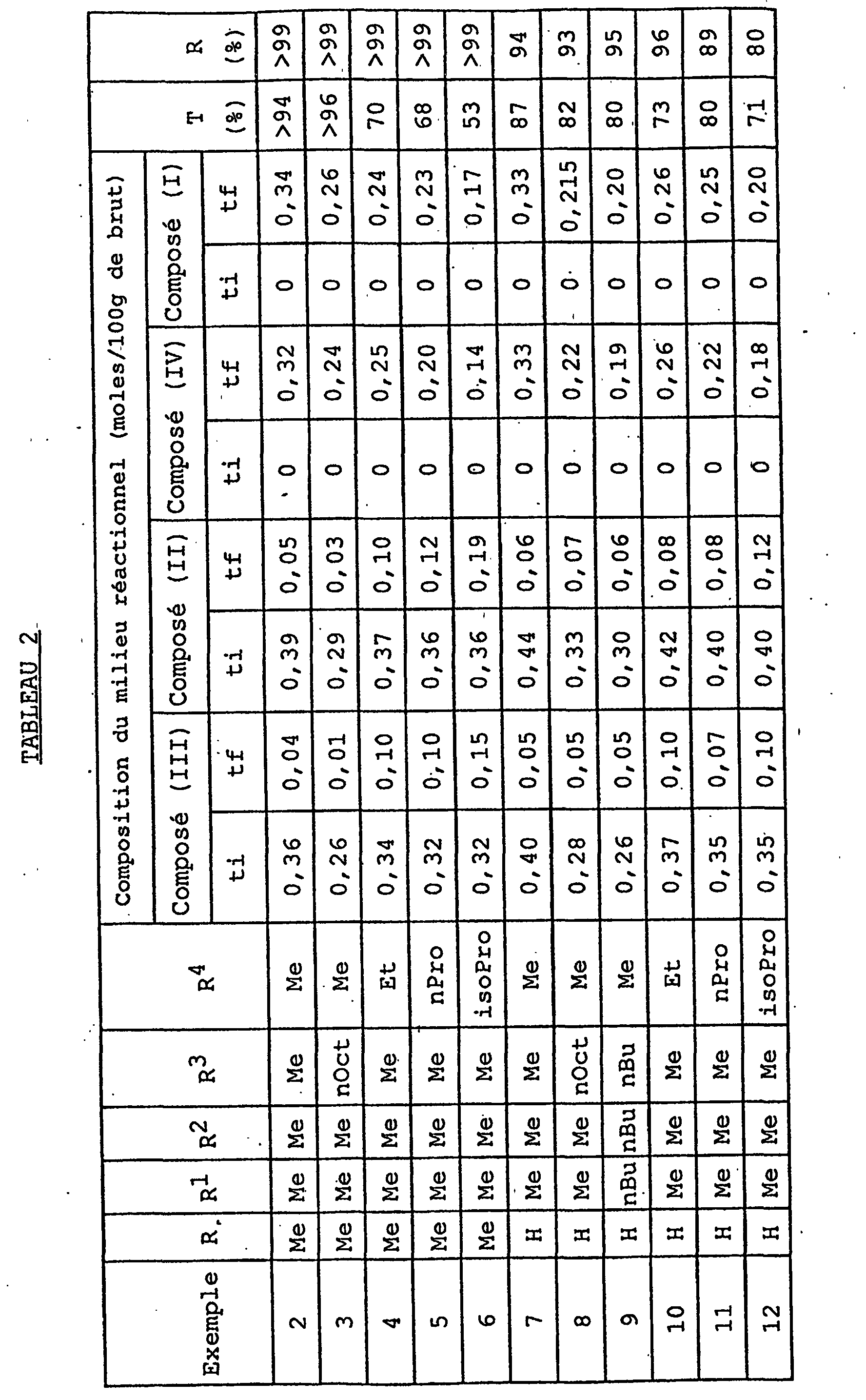

### EXEMPLE 13 : Péparation du Bu3SiMA à partir de l'AMA2O et du Bu3SiOH

On a procédé comme à l'Exemple 1 excepté que l'on a utilisé du Bu3SiOH au lieu du Bu3SiOMe.

Le Bu3SiOH utilisé a la composition massique suivante (en %) :
- Bu3SiOH ..... 91,4
- Bu3SiOMe ..... 0,9
- Bu3SiOSiBu3 ..... 2,6
- Bu3SiH ...... 0,9
- Autres ..... qsp 100.

Le rapport molaire AMA2O/Bu3SiOH est de 2/1.

Après 6 h de réaction à 110 °C, le brut réactionnel a la composition massique suivante (en %) :
• MAM ..... 0,3
• AMA ..... 16,6
• AMA20 ..... 27,4
• Bu3SiOH ..... 0,13
• Bu3SiOMe ..... 0,08
• Bu3SiMA ..... 48
• Bu3SiOSiBu3 ..... 7,9.

Une partie du Bu3SiOH a été consommée sous forme Bu3SiOSiBu3 ; le reste a été converti en Bu3SiMA.

## Revendications

1. Procédé de fabrication d'un (méth)acrylate silané de formule : 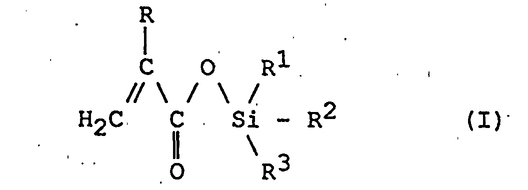 dans laquelle :
- R représente hydrogène ou méthyle
- R¹,R² et R³ représentent chacun indépendamment un radical alkyle, linéaire ou ramifié, en C₁-C₁₀, un radical aryle ou un radical aralkyle, ces radicaux pouvant être substitués et pouvant contenir des hétéroatomes,
**caractérisé par le fait que** l'on fait réagir l'anhydride de formule (II) : 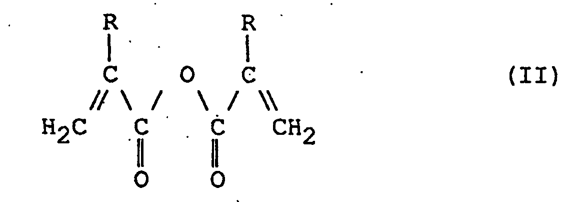 dans laquelle R est tel que défini ci-dessus, avec un composé silané de formule (III) 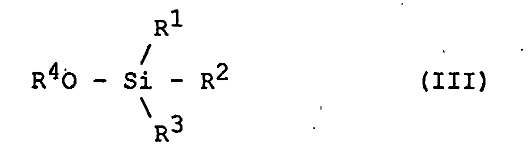 dans laquelle :
- R¹, R² et R³ sont tels que définis ci-dessus ; et
- R⁴ représente hydrogène ou un radical entrant dans la définition donnée ci-dessus pour R¹, R² et R³.

2. Procédé selon la revendication 1, **caractérisé par le fait que** R¹, R², R³ et R⁴ sont choisis parmi les radicaux méthyle, éthyle, n-propyle, isopropyle, n-butyle, isobutyle, tert.-butyle, phényle et alkylphényle, avec alkykle en C₁-C₁₀, R⁴ pouvant en outre représenter hydrogène.

3. Procédé selon l'une des revendications 1 et 2, **caractérisé par le fait que** l'on conduit la réaction avec un rapport molaire composé (II) / composé (III) qui est compris entre 0,3/1 et 3/1.

4. Procédé selon la revendication 3, **caractérisé par le fait que** l'on conduit la réaction avec un rapport molaire composé (II)/composé(III) qui est compris entre 0,7/1 et 2/1, de préférence entre 0,9/1 et 1,2/1.

5. Procédé selon l'une des revendications 1 à 4, **caractérisé par le fait que** l'on conduit la réaction à une température de 20 à 200°C, de préférence de 75 à 100°C, en particulier de 80 à 120°C.

6. Procédé selon l'une des revendications 1 à 5, **caractérisé par le fait que** l'on conduit la réaction à la pression atmosphérique.

7. Procédé selon l'une des revendications 1 à 6, **caractérisé par le fait que** l'on conduit la réaction jusqu'à conversion maximale des réactifs déterminée à l'aide des méthodes analytiques usuelles.

8. Procédé selon la revendication 7, **caractérisé par le fait que** l'on conduit la réaction pendant une durée de 3 à 8 heures.

9. Procédé selon l'une des revendications 1 à 8, **caractérisé par le fait que** l'on conduit la réaction en présence d'au moins un catalyseur choisi notamment parmi le 1-méthylimidazole, la diméthylaminopyridine, la 4-pyrrolidinopyridine, la 4-pipéridinopyridine, la 4-morpholinopyridine, les triflates, la tributylphosphine, la triéthylamine, la pyridine, les montmorillonites, les acides protiques tels que l'acide paratoluènesulfonique et les acides de Lewis tels que ZnCl₂, le ou les catalyseurs étant utilisés à raison de 0,05 à 1% en poids par rapport au mélange des réactifs.

10. Procédé selon l'une des revendications 1 à 9, **caractérisé par le fait que** la réaction en présence d'au moins un inhibiteur de polymérisation choisi notamment parmi l'hydroquinone, l'éther méthylique de l'hydroquinone, la phénothiazine, l'éther méthylique de l'hydroquinone, la phénothiazine, le 2,2,5,5-tétraméthyl-1-pyrrolidinyloxy et ses homologues tels que le 3-carboxy-2,2,5,5-tétraméthyl-1-pyrrolidinyloxy, le 2,2,6,6-tétraméthyl-1-pipéridinyloxy, le 4-hydroxy-2,2,6,6-tétraméthyl-1-pipéridinyloxy, le 4-méthoxy-2,2,6,6-tétraméthyl-1-pipéridinyloxy et les inhibiteurs phénoliques encombrés, le ou les inhibiteurs de polymérisation étant utilisés à raison de 0,05 à 0,5 % en poids par rapport au mélange des réactifs.

11. Procédé selon l'une des revendications 1 à 10, **caractérisé par le fait qu'**il conduit à un mélange brut contenant, outre le composé (I), le composé de formule (IV) : 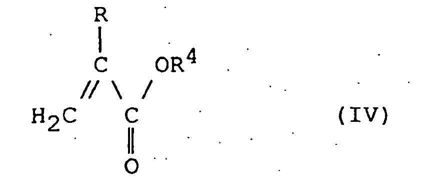 dans laquelle R et R⁴ sont tels que définis à la revendication 1, à la suite de quoi ledit mélange peut être débarrassé des composés les plus légers par distillation ou peut être soumis à une distillation pour obtenir le composé (I) pur.

## Patentansprüche

1. Verfahren zur Herstellung eines Silyl (meth) - acrylats der Formel: 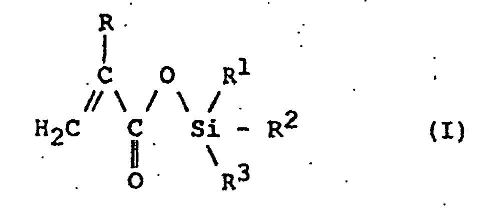 worin:
- R für Wasserstoff oder Methyl steht;
- R¹, R² und R³ jeweils unabhängig voneinander für einen linearen oder verzweigten C₁₋₁₀-Alkylrest, einen Arylrest oder einen Aralkylrest stehen, wobei diese Reste substituiert sein können und Heteroatome enthalten können;
**dadurch gekennzeichnet, daß** man das Anhydrid der Formel (II): 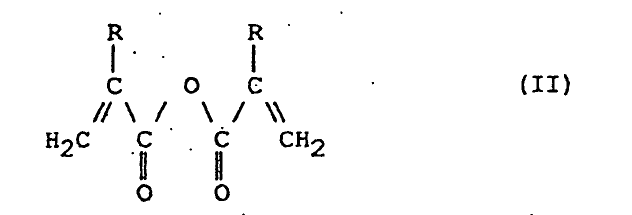 worin R die oben angegebene Bedeutung besitzt,
mit einer Silylverbindung der Formel (III) 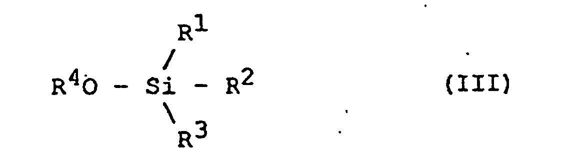 worin:
- R¹, R² und R³ die oben angegebene Bedeutung besitzen und
- R⁴ für Wasserstoff oder einen unter die oben für R¹, R² und R³ angegebene Definition fallenden Rest steht,
umsetzt.

2. Verfahren nach Anspruch 1, **dadurch gekennzeichnet, daß** R¹, R², R³ und R⁴ unter Methyl-, Ethyl-, n-Propyl-, Isopropyl-, n-Butyl-, Isobutyl-, tert.-Butyl-, Phenyl- und Alkylphenylresten mit C₁₋₁₀-Alkyl ausgewählt sind, wobei R⁴ außerdem für Wasserstoff stehen kann.

3. Verfahren nach Anspruch 1 oder 2, **dadurch gekennzeichnet, daß** man die Umsetzung mit einem Molverhältnis von Verbindung (II) zu Verbindung (III) zwischen 0,3/1 und 3/1 durchführt.

4. Verfahren nach Anspruch 3, **dadurch gekennzeichnet, daß** man die Umsetzung mit einem Molverhältnis von Verbindung (II) zu Verbindung (III) zwischen 0,7/1 und 2/1, und vorzugsweise zwischen 0,9/1 und 1,2/1 durchführt.

5. Verfahren nach einem der Ansprüche 1 bis 4, **dadurch gekennzeichnet, daß** man die Umsetzung bei einer Temperatur von 20 bis 200°C, vorzugsweise 75 bis 100°C und insbesondere 80 bis 120°C durchführt.

6. Verfahren nach einem der Ansprüche 1 bis 5, **dadurch gekennzeichnet, daß** man die Umsetzung bei Normaldruck durchführt.

7. Verfahren nach einem der Ansprüche 1 bis 6, **dadurch gekennzeichnet, daß** man die Umsetzung bis zum maximalen Umsatz der Reaktanten, bestimmt mit Hilfe üblicher analytischer Methoden, durchführt.

8. Verfahren nach Anspruch 7, **dadurch gekennzeichnet, daß** man die Umsetzung über einen Zeitraum von 3 bis 8 Stunden durchführt.

9. Verfahren nach einem der Ansprüche 1 bis 8, **dadurch gekennzeichnet, daß** man die Umsetzung in Gegenwart mindestens eines Katalysators, der insbesondere unter 1-Methylimidazol, Dimethylaminopyridin, 4-Pyrrolidinopyridin, 4-Piperidinopyridin, 4-Morpholinopyridin, Triflaten, Tributylphosphin, Triethylamin, Pyridin, Montmorilloniten, Protonensäuren wie para-Toluolsulfonsäure und Lewis-Säuren wie ZnCl₂ ausgewählt wird, durchführt, wobei man den Katalysator bzw. die Katalysatoren in einer Menge von 0,05 bis 1 Gew.-%, bezogen auf die Reaktantenmischung, verwendet.

10. Verfahren nach einem der Ansprüche 1 bis 9, **dadurch gekennzeichnet, daß** man die Umsetzung in Gegenwart mindestens eines Polymerisationsinhibitors, der insbesondere unter Hydrochinon, Hydrochinonmethylether, Phenothiazin, 2,2,5,5-Tetramethyl-1-pyrrolidinyloxy und Homologen davon wie 3-Carboxy-2,2,5,5-tetramethyl-1-pyrrolidinyloxy, 2,2,6,6-Tetramethyl-1-piperidinyloxy, 4-Hydroxy-2,2,6,6-tetramethyl-1-piperidinyloxy und 4-Methoxy-2,2,6,6-tetramethyl-1-piperidinyloxy und gehinderten phenolischen Inhibitoren ausgewählt wird, durchführt, wobei man den Polymerisationsinhibitor bzw. die Polymerisationsinhibitoren in einer Menge von 0,05 bis 0,5 Gew.-%, bezogen auf die Reaktantenmischung, verwendet.

11. Verfahren nach einem der Ansprüche 1 bis 10, **dadurch gekennzeichnet, daß** es eine Rohmischung, die neben der Verbindung (I) die Verbindung der Formel (IV): 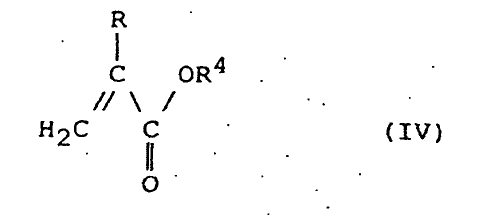 worin R und R⁴ die in Anspruch 1 angegebene Bedeutung besitzen, enthält, ergibt, wonach die Mischung durch Destillation von den leichtesten Verbindungen befreit werden kann oder zwecks Erhalt von reiner Verbindung (I) einer Destillation unterworfen werden kann.

## Claims

1. Process for manufacturing a silanized (meth)acrylate of formula: 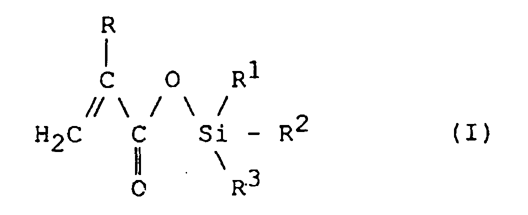 in which:
- R represents hydrogen or methyl;
- R¹, R² and R³ each independently represent a linear or branched C₁-C₁₀ alkyl radical, an aryl radical or an aralkyl radical, these radicals possibly being substituted and possibly containing hetero atoms
**characterized in that** the anhydride of formula (II) : 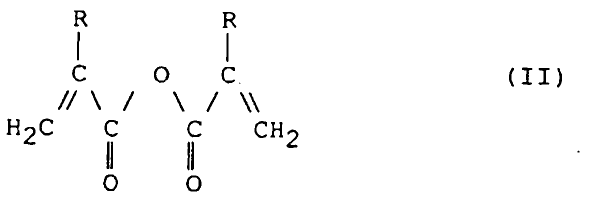 in which R is as defined above,
is reacted with a silanized compound of formula (III) 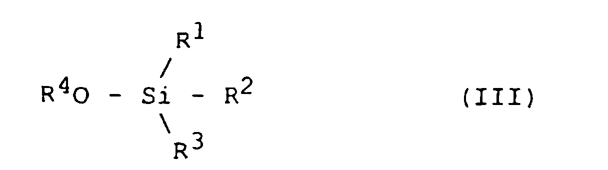 in which:
- R¹, R² and R³ are as defined above; and
- R⁴ represents hydrogen or a radical falling within the definition given above for R¹, R² and R³.

2. Process according to Claim 1, **characterized in that** R¹, R², R³ and R⁴ are chosen from methyl, ethyl, n-propyl, isopropyl, n-butyl, isobutyl, tert-butyl, phenyl and alkylphenyl radicals with alkyl being C₁-C₁₀, R⁴ also possibly being hydrogen.

3. Process according to either of Claims 1 and 2, **characterized in that** the reaction is performed with a compound (II)/compound (III) molar ratio of between 0.3/1 and 3/1.

4. Process according to Claim 3, **characterized in that** the reaction is performed with a compound (II)/compound (III) molar ratio of between 0.7/1 and 2/1 and preferably between 0.9/1 and 1.2/1.

5. Process according to one of Claims 1 to 4, **characterized in that** the reaction is performed at a temperature of from 20 to 200°C, preferably from 75 to 100°C, in particular from 80 to 120°C.

6. Process according to one of Claims 1 to 5, **characterized in that** the reaction is performed at atmospheric pressure.

7. Process according to one of Claims 1 to 6, **characterized in that** the reaction is performed to the point of maximum conversion of the reagents, determined using the usual analytical methods.

8. Process according to Claim 7, **characterized in that** the reaction is performed for a period of from 3 to 8 hours.

9. Process according to one of Claims 1 to 8, **characterized in that** the reaction is performed in the presence of at least one catalyst chosen especially from 1-methylimidazole, dimethylaminopyridine, 4-pyrrolidinopyridine, 4-piperidinopyridine, 4-morpholinopyridine, triflates, tributylphosphine, triethylamine, pyridine, montmorillonites, protic acids such as para-toluenesulphonic acid and Lewis acids such as ZnCl₂, the catalyst(s) being used in a proportion of from 0.05 to 1% by weight relative to the mixture of reagents.

10. Process according to one of Claims 1 to 9, **characterized in that** the reaction is carried out in the presence of at least one polymerization inhibitor chosen especially from hydroquinone, hydroquinone methyl ether, phenothiazine, 2,2,5,5-tetramethyl-1-pyrrolidinyloxy and homologues thereof such as 3-carboxy-2,2,5,5-tetramethyl-1-pyrrolidinyloxy, 2,2,6,6-tetramethyl-1-piperidinyloxy, 4-hydroxy-2,2,6,6-tetramethyl-1-piperidinyloxy, and 4-methoxy-2,2,6,6-tetramethyl-1-piperidinyloxy, and hindered phenolic inhibitors, the polymerization inhibitor(s) being used in a proportion of from 0.05 to 0.5% by weight relative to the mixture of reagents.

11. Process according to one of Claims 1 to 10, **characterized in that** it gives a crude mixture containing, besides compound (I) the compound of formula (IV): 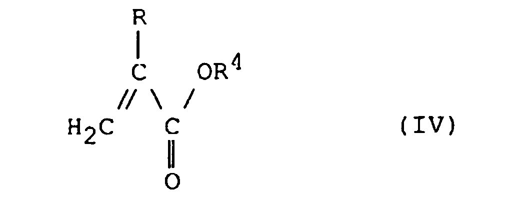 in which R and R⁴ are as defined in Claim 1, after which the said mixture may be freed of the lightest compounds by distillation or may be subjected to a distillation to obtain the pure compound (I).
